# DEMANDE DE BREVET EUROPEEN

(11) **EP 2 425 881 A1**
(43) Date de publication de la demande: **07.03.2012**
(21) Numéro de dépôt: 11290374.5
(22) Date de dépôt: 17.08.2011
(51) Int. Cl.: B01D 3/00, B01D 3/32, B01J 8/02, B01J 8/04

(54) **Dispositif de distribution d'un mélane polyphasique comportant un plateau brise-jet avec élément de séparation**

(30) Priorité: 03.09.2010 FR 1003531
(71) Demandeur: IFP Energies nouvelles, 92852 Rueil-Malmaison Cedex (FR)
(72) Inventeur: Augier, Frederic, 69360 Saint Symphorien d'Ozon (FR); Bazer-Bachi, Frederic, 69230 St. Genis-Laval (FR); Boyer, Christophe, 69390 Charly (FR); Gagniere, Emilie, 69100 Villeurbanne (FR)

(57) **Abrégé**

La présente invention concerne un dispositif pour distribuer un mélange polyphasique constitué d'au moins une phase gazeuse et au moins une phase liquide, ledit mélange étant en écoulement descendant à travers au moins un lit de solides de particules, et le dit dispositif comportant au moins un plateau (1) situé au-dessus d'un lit de solides de particules, une pluralité de canaux mélangeurs (2) desdites phases liquide et gazeuse, un système dispersif (3) de type plateau brise-jet (3) ayant une porosité contrôlée, muni sur une partie au moins de son périmètre de rebords (36), disposé au dessous des canaux mélangeurs (2) et au-dessus du lit de solides de particules, le dit dispositif de distribution étant caractérisé en ce que le système dispersif (3) comporte au moins un élément de séparation (32).

## Description

La présente invention concerne le domaine de la distribution de fluides polyphasiques dans les réacteurs catalytiques et plus particulièrement un dispositif permettant d'optimiser la distribution de fluides dans les réacteurs catalytiques de type lits fixes, fonctionnant en écoulement descendant, dans les applications de type hydrotraitement de gazole et toutes opérations d'hydrogénation fonctionnant en écoulement gaz-liquide ruisselant.

La présente invention s'applique en particulier dans le domaine des distributeurs gaz/liquide comme par exemple ceux employés pour la mise en oeuvre des réactions d'hydrocraquage, d'hydrotraitement, d'hydrodésulfuration, d'hydrodémétallation, d'hydrodéazotation, d'hydrogénations sélectives ou totales, l'hydrogénation sélective des essences de vapocraquage, l'hydrogénation des composés aromatiques dans des coupes aliphatiques et/ou naphténiques, l'hydrogénation des oléfines dans des coupes aromatiques.

Elle trouve aussi son application pour mettre en oeuvre d'autres réactions nécessitant un bon mélange d'une phase gazeuse et d'une phase liquide, par exemple les réactions d'oxydation partielle ou totale, les réactions d'amination, d'acétyloxydation, d'ammoxydation et d'halogénation en particulier de chloration.

Le dispositif de distribution est donc en général disposé dans une enceinte ou réacteur comportant une entrée d'un fluide liquide et une entrée d'un fluide gazeux, et contenant au moins un lit par exemple de solides granulaires.

Ce dispositif peut être disposé :
- soit en tête de l'enceinte au dessus du lit,
- soit en sortie d'un lit avec une alimentation sur toute la section de l'enceinte sur le lit suivant.

Pour améliorer la distribution des fluides avec ces dispositifs, une des possibilités utilisée dans l'art antérieur consiste par exemple à utiliser des plateaux distributeurs comportant une pluralité de canaux mélangeurs dédiés au passage du gaz et du liquide. Ces canaux mélangeurs peuvent être de différents types et positionnés suivant différentes configurations sur le plateau. De tels dispositifs sont décrits dans les demandes de brevets FR 2 807 676, FR 2 745 202, FR 2 853 260 ou US 2007/0241467.

L'inconvénient de ce type de canaux mélangeurs provient du fait que l'écoulement en sortie de canal mélangeur forme un jet diphasique relativement concentré, ce qui est problématique car le liquide n'arrose pas toute la section de la colonne. Pour pallier à ce problème, le pas entre les canaux mélangeurs est relativement restreint (entre 80 et 200 mm en général) ce qui augmente considérablement la quantité de canaux mélangeurs et donc augmente le coût global du plateau distributeur.

Une autre solution pour améliorer l'arrosage du lit est de positionner sous les canaux mélangeurs des éléments de dispersion de jets. II y a plusieurs types d'éléments de dispersion utilisables. Des éléments de types inserts sont souvent fixés à chaque canaux mélangeurs de manière à disperser le jet selon un angle plus large, et de manière homogène sous le canal mélangeur comme décrit dans les demandes de brevet EP 2 075 056 et US 2010/0019061.

Ce type de solution est efficace mais elle nécessite qu'une certaine hauteur soit respectée entre le canal mélangeur et le haut du lit de particules afin que le jet puisse arroser largement le lit. Idéalement cette hauteur doit permettre que les jets formés par des canaux mélangeurs voisins se rejoignent. De plus cette solution est assez onéreuse du fait du grand nombre d'éléments de dispersion à fabriquer.

Une solution alternative, décrite dans le brevet FR 2 807 673, consiste à positionner des éléments de dispersion de type brise-jet sous le plateau, communs à plusieurs canaux mélangeurs (voire commune à toute une rangée). Classiquement des grilles ou plaques perforées sont mises en oeuvre. Il est important que les différents éléments utilisés restent disjoints, de manière à ce que le gaz puisse circuler librement entre les éléments de dispersion, sans être contraint de traverser les éléments eux-mêmes. Le jet gaz-liquide impacte la grille et se disperse sur sa surface avant de tomber en pluie sur le lit de particules.

Le brevet FR 2 832 075 décrit une amélioration de ce dispositif qui consiste à rajouter des rebords uniquement sur le périmètre des grilles. Ces rebords permettent au liquide de rester au niveau de la grille et de ne pas se déverser préférentiellement à la périphérie de la grille. Ce type de dispositif présente de nombreux avantages :
- il est moins coûteux que les inserts, permettant de plus d'augmenter le pas entre les canaux mélangeurs;
- l'écoulement est réparti sur la section de colonne donc il ne nécessite pas de distance de formation de jets sous les grilles.

L'inconvénient de ce type de dispositif est que son fonctionnement peut être altéré si le plateau n'est pas parfaitement droit. Si le plateau penche légèrement dans une direction (fléchissement du plateau sous son poids, tolérance au montage, défaut d'horizontalité...), la grille peut alors diriger partiellement la phase liquide dans une direction en faisant office de rigole. Il en résulte alors une mauvaise distribution du liquide dans le lit et une diminution des performances réactionnelles (perte de conversion et/ou de sélectivité). Ce problème se rencontre avec des canaux mélangeurs de type cheminée mais également avec des canaux mélangeurs de type ascenseur de vapeur (également appelé vapor-lift selon la terminologie anglo-saxonne) ou de type canaux avec cloche (également appelé bubble cap selon la terminologie anglo-saxonne).

La présente invention a donc pour objet de palier un ou plusieurs des inconvénients de l'art antérieur en proposant un dispositif de distribution, comprenant un plateau brise-jet, et qui permet de limiter ou d'empêcher une mauvaise distribution de l'écoulement liquide en cas de défaut d'horizontalité du plateau brise-jet.

Pour cela la présente invention propose un dispositif pour distribuer un mélange polyphasique constitué d'au moins une phase gazeuse et au moins une phase liquide, ledit mélange étant en écoulement descendant à travers au moins un lit de solides de particules, et ledit dispositif comportant au moins un plateau situé au-dessus d'un lit de solides de particules, une pluralité de canaux mélangeurs desdites phases liquide et gazeuse, un système dispersif de type plateau brise-jet ayant une porosité contrôlée, muni sur une partie au moins de son périmètre de rebords, disposé au dessous des canaux mélangeurs et au-dessus du lit de solides de particules, le dit dispositif de distribution étant caractérisé en ce que le système dispersif comporte au moins un élément de séparation.

Selon un mode de réalisation de l'invention, l'élément de séparation est formé par une plaque positionnée perpendiculairement au plateau brise-jet.

Selon un mode de réalisation de l'invention, l'élément de séparation a une hauteur comprise entre 50 et 100% de celle du rebord du plateau brise-jet.

Selon un mode de réalisation de l'invention, l'élément de séparation la forme d'un parallélépipède rectangle plan.

Selon un mode de réalisation de l'invention, l'élément de séparation est plein ou percé ou poreux.

Selon un mode de réalisation de l'invention, l'élément de séparation ferme entre 40 et 100% de la section transverse du plateau brise-jet.

Selon un mode de réalisation de l'invention, l'élément de séparation est positionné directement sous un canal mélangeur.

Selon un mode de réalisation de l'invention, l'élément de séparation est positionné sous un canal mélangeur, décalé par rapport à ce canal mélangeur de façon à se trouver positionné entre deux canaux mélangeurs.

Selon un mode de réalisation de l'invention, le système dispersif comporte plusieurs éléments de séparation.

Selon un mode de réalisation de l'invention, les éléments de séparation sont disposés de façon à séparer entre 1 et 10 canaux mélangeurs.

Selon un mode de réalisation de l'invention, la répartition des éléments de séparation varie en fonction de leur position sur le plateau brise-jet.

Selon un mode de réalisation de l'invention, l'élément de séparation est fixé avec un système de fixation comportant des moyens d'obturation d'une partie du plateau brise-jet.

Selon un mode de réalisation de l'invention, les moyens d'obturation sont formés par une plaque.

Selon un mode de réalisation de l'invention, la plaque peut être de forme carré, rectangle, ronde ou ovale.

Selon un mode de réalisation de l'invention, les canaux mélangeurs sont des cheminées.

Selon un mode de réalisation de l'invention, les canaux mélangeurs sont des ascenseurs de vapeur.

Selon un mode de réalisation de l'invention, les canaux mélangeurs sont des canaux avec cloche.

L'invention concerne également l'utilisation du dispositif tel que décrit précédemment dans un réacteur adapté pour les hydrotraitements ou les hydrogénations ou les oxydations.

D'autres caractéristiques et avantages de l'invention seront mieux compris et apparaîtront plus clairement à la lecture de la description faite, ci-après, en se référant aux figures annexées et données à titre d'exemple:
- la figure 1 est une représentation schématique vue en perspective du dispositif de distribution selon l'invention positionné sous des canaux mélangeurs,
- la figure 2 est une représentation schématique vue de dessus du dispositif de distribution selon l'invention,
- la figure 3 est une représentation schématique vue de dessus d'une variante du dispositif de distribution selon l'invention,
- la figure 4 est une représentation schématique vue de dessus d'une variante du dispositif de distribution selon l'invention,
- la figure 5 est une représentation schématique vue de dessus (5a) et vue de coté (5b) d'une variante du dispositif de distribution selon l'invention,
- la figure 6 est une représentation schématique vue de coté d'un exemple d'utilisation du dispositif de distribution selon l'invention.

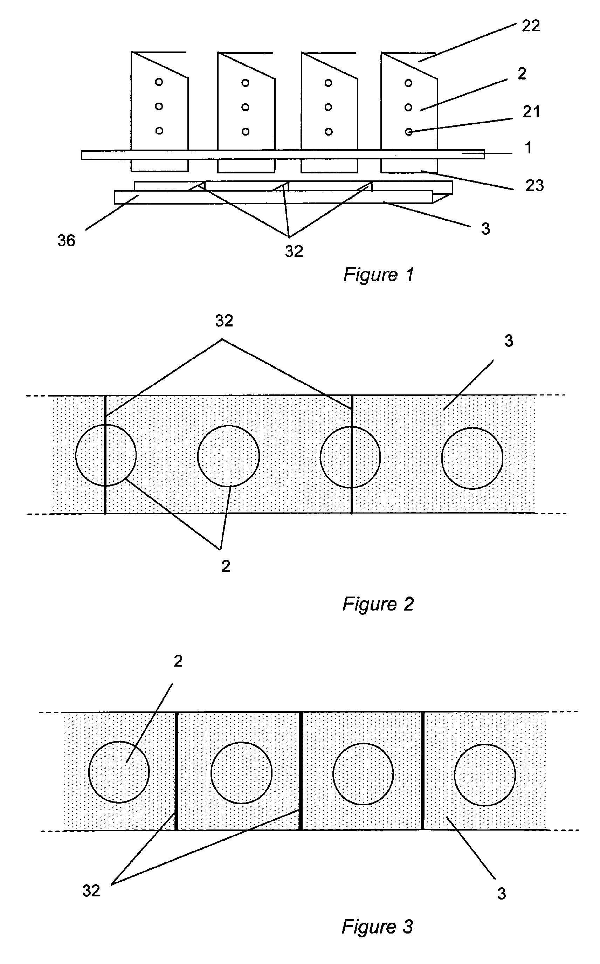

Comme illustré sur les figures 1 à 5 le dispositif selon la présente invention peut comporter une pluralité de canaux mélangeurs tels que des cheminées (2) ayant au moins une section de passage supérieure (22) par exemple un biseaux au niveau de sa partie supérieure et une section de passage inférieure (23). Ces canaux mélangeurs (illustrées par des ronds sur les figures 2, 3, 4 et 5a) peuvent comporter une pluralité de trous (21) permettant le passage du liquide. En dessous du plateau (1) un système dispersif type plateau brise-jet (3) reçoit le mélange polyphasique formé dans les canaux mélangeurs (2).

La hauteur des canaux mélangeurs est le plus souvent comprise entre 100 et 500 millimètres (mm) de préférence entre 200 et 400 mm.

Selon un mode de réalisation de l'invention, les canaux mélangeurs peuvent également être des ascenseurs de vapeur. Le dispositif de type ascenseur de vapeur (plus connu sous le nom de vapor-lift selon la terminologie anglo-saxonne et décrit dans les brevets US 7 600 742 et US 5 942 162) est constitué de tubes formant un circuit de circulation du fluide en M. Le terme ascenseur s'explique par le fait que dans un premier temps la vapeur monte dans le dispositif par des tubes extérieurs et dans un deuxième temps la vapeur descend par le tube central.

Selon un autre mode de réalisation de l'invention, les canaux mélangeurs peuvent également être des canaux avec cloche (également appelées bubble caps selon la terminologie anglo-saxonne).

Les tubes des canaux mélangeurs dépassent du plateau (1) d'une hauteur qui varie habituellement entre 10 et 200 mm et souvent entre 25 et 50 mm. Le plus souvent le canal mélangeur se prolonge en dessous du plateau distributeur sur une longueur inférieure ou égale à la distance entre la sortie (23) d'un canal mélangeur et le plateau type brise-jet (3).

La partie des canaux mélangeurs (2) disposée au dessus du plateau est percée de trous (21) ou de fentes sur sa périphérie sur un ou plusieurs niveaux, de préférence au moins deux niveaux.

Le moyen d'assurer la dispersion du mélange biphasique ou polyphasique formé dans le canal mélangeur est un système dispersif de type brise-jet (3) situé en dessous et à proximité de la section de passage (23) des canaux mélangeurs. Ce système dispersif brise-jet est sous la forme d'un plateau brise-jet et peut être soit troué soit poreux. Lorsque le plateau est troué, les trous peuvent avoir des tailles différentes suivant leur position sur le plateau. Et par exemple, plus les trous sont éloignés du canal mélangeur, plus leur diamètre est grand, ou inversement.

La distance entre la sortie (23) du canal mélangeur et le plateau brise-jet (3) varie le plus souvent de 5 à 500 mm souvent de 10 à 200 mm et de préférence de 50 à 100 mm. Le plateau brise-jet est souvent constitué de plusieurs éléments séparés et disposés à des hauteurs différentes (par rapport à la sortie (23) des canaux mélangeurs) mais dont la totalité des surfaces recouvre la section du réacteur. Cette différence de distance entre les différents éléments du plateau brise-jet et la sortie (23) des canaux mélangeurs permet de laisser une section de passage libre pour le passage du gaz. Le plateau brise-jet (3) est situé à une distance du lit de solides granulaires choisie pour conserver le mélange formé à l'intérieur desdits canaux mélangeurs et sortant desdits canaux mélangeurs par lesdites sections de passage inférieures, jusqu'à sa distribution dans le lit de solides granulaires. Cette distance est habituellement comprise entre 0 et 500 mm, et de préférence entre 1 et 100 mm.

Le plateau brise-jet peut être suspendu au plateau (1) ou à l'extrémité inférieure des canaux mélangeurs (2).

Le plateau brise-jet (3) comporte également un rebord (36) permettant de maintenir un niveau liquide sur toute la surface des grilles aux débits élevés. Ce rebord (36) est disposé sur la totalité du plateau brise-jet (3), ces rebords pouvant éventuellement avoir eux-mêmes une porosité. Les rebords (36) peuvent avoir des hauteurs comprises entre 0,1 et 1 fois le diamètre des canaux et par exemple entre 2 et 50 mm. Ils peuvent avoir eux mêmes une porosité comprise entre 0 et 80 %. Ils peuvent être inclinés ou non par rapport à la verticale, et leur inclinaison est généralement comprise entre -40° et +60° et préférentiellement entre -30° et +45°, ces valeurs d'angle étant repérées par rapport à la verticale, les valeurs positives correspondant à des rebords inclinés vers l'extérieur du système dispersif, et les valeurs négatives correspondant à des rebords rentrant vers l'intérieur du système dispersif. Bien entendu, lorsque des systèmes dispersifs appartenant à des plans horizontaux différents sont munis de rebords, il faut que la distance séparant ces plans horizontaux soit supérieure à la hauteur des rebords. Les rebords (36) peuvent concerner une partie seulement des systèmes dispersifs, l'autre partie n'ayant pas de tels rebords. Il est préférable souvent d'équiper de rebords les systèmes dispersifs situés sur les plans les plus proches du lit de solide granulaire. Dans certains cas, il peut même être avantageux qu'un système dispersif donné possède des rebords sur une partie seulement de son périmètre. La forme géométrique précise de ces rebords peut varier, en particulier l'extrémité supérieure des rebords peut être incurvée. Au voisinage du rebord d'un système dispersif, la porosité du système dispersif peut être nulle ou identique au reste de la surface du système dispersif (3). On entend par voisinage du rebord d'un système dispersif, la zone située à une distance inférieure ou égale à 30 mm du rebord et préférentiellement inférieure ou égale à 20 mm du rebord.

Une des fonctions de ces rebords et de leur voisinage à porosité nulle, est d'effectuer une retenue vis à vis de certaines impuretés éventuellement contenues dans la charge liquide, particulièrement lorsque celle-ci est constituée d'hydrocarbures lourds tels que des coupes à point d'ébullition supérieur à 350°C, comme cela est le cas dans les unités d'hydrotraitement de coupes lourdes type gazole.

Dans ce cas, la zone de voisinage des rebords se charge progressivement en impuretés, évitant de la sorte la contamination du lit de solides granulaires.

L'objet de la présente invention consiste à positionner en travers des plateaux brise-jet (3) au moins un élément de séparation (32), également appelé chicane, pour limiter ou empêcher que l'écoulement liquide sortant d'un canal mélangeur (2) soit entrainé à une distance éloignée de ce canal par un écoulement gravitaire préférentiel sur le plateau brise-jet. C'est à dire que dans les cas où le plateau brise-jet (3) n'est pas totalement horizontal pour les raisons invoquées précédemment, l'élément de séparation va empêcher que le liquide ne s'accumule par gravité sur un même endroit du brise-jet et soit ensuite déversé de façon irrégulière sur le lit de particules. Le plateau brise-jet peut comporter un ou plusieurs éléments de séparation (32). Ces éléments de séparation peuvent être formés par des plaques positionnées perpendiculairement au plateau brise-jet, c'est à dire perpendiculaire au fond du plateau. Ils ont en général une hauteur comprise entre 20 et 100% de celle du rebord (36) du plateau brise-jet (3), et de préférence entre 50% et 90%. Ils sont en général disposés dans le plan transverse du plateau brise-jet (3).

selon un mode de réalisation de l'invention, les éléments de séparation (32) sont orientés selon le plan perpendiculaire au bord le plus long du plateau (3).

Ces éléments de séparation (32) peuvent être disposés de différentes façons. Ils peuvent être positionnés directement sous un canal mélangeur (2) de façon à disperser son écoulement (figure 2). Ils peuvent être positionnés sous les canaux mélangeurs mais décalés par rapport aux canaux mélangeurs de façon à se trouver positionnés entre deux canaux mélangeurs (figure 3).

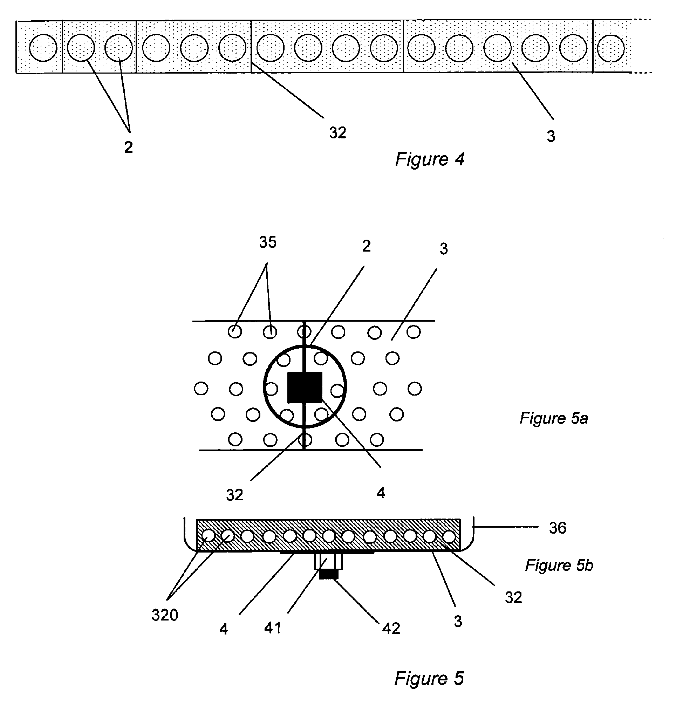

Dans certains cas, le fléchissement mécanique des plateaux brise-jet (3) n'est pas homogène sur la section de colonne ou réacteur. Ce fléchissement déforme fortement le plateau près du bord, et moins fortement au centre, il est alors possible de distribuer les éléments de dispersion en fonction de leur position vis à vis du rebord. La répartition des éléments de séparation (32) varie ainsi en fonction de leur position sur le plateau brise-jet (3). Par exemple les éléments de séparation (32) peuvent être disposés de façon arithmétique comme illustré sur la figure 4. Dans ce cas, les éléments de séparation (32) sont disposés entre les canaux mélangeurs (2) non pas de façon régulière, mais de façon à séparer un nombre différent de canaux mélangeurs (2) et par exemple tous les 1, 2, 3, 4 etc. canaux mélangeurs (2). Ils peuvent être également disposés en plus grand nombre au niveau des extrémités du plateau brise-jet (3), et par exemple, dans ces zones, tous les canaux mélangeurs (2) et au milieu tous les 2, 3, 4 etc. canaux mélangeurs (2). Ces exemples ne sont nullement limitatifs et toutes les positions des éléments de séparation (32) peuvent être envisagées. Par exemple les éléments de séparation (32) peuvent être disposés tous les 1 à 10 canaux mélangeurs, et de préférence tous les 1 à 5 canaux mélangeurs.

Ces éléments de séparation (32) peuvent avoir la forme d'un rectangle plan ou toutes autres formes adaptées au plateau brise-jet (3) utilisé. Les éléments de séparation (32) peuvent être pleins (figure 1), percés (figure 5 b) ou poreux de manière à fermer partiellement ou totalement la section transverse du plateau brise-jet (3). Quelle que soit leur forme, les éléments de séparation ferment entre 40% et 100% de la section transverse du plateau, et de préférence entre 50% et 100%. La section transverse correspond à la section orientée selon le plan longitudinal de l'élément de séparation (32).

Les éléments de séparation (32) sont fixés au plateau brise-jet et au rebord par des moyens de fixations classiques.

Le système de fixation des éléments de séparation (32) sur le plateau brise-jet (3) peut également être conçu pour obturer une partie du plateau brise-jet (3) (figure 5a). Le système de fixation peut par exemple comporter des moyens de fixation comportant des moyens d'obturer ce type de plaque (4) qui va boucher un ou plusieurs trous du plateau brise-jet (3). La plaque peut être de forme ronde, ovale, carrée, rectangle ou d'autres formes. La forme et la taille de la plaque étant choisies en fonction du nombre de trous ou de la surface du plateau brise-jet (3) devant être obstruée. Une telle plaque peut par exemple obstruer de un à plusieurs trous. La plaque peut être soudée ou fixée plateau brise-jet (3) avec un système de fixation du type vis (42) et écrou (41) (comme illustré sur la figure 5b) ou tout autre système de fixation adapté au dispositif selon l'invention.

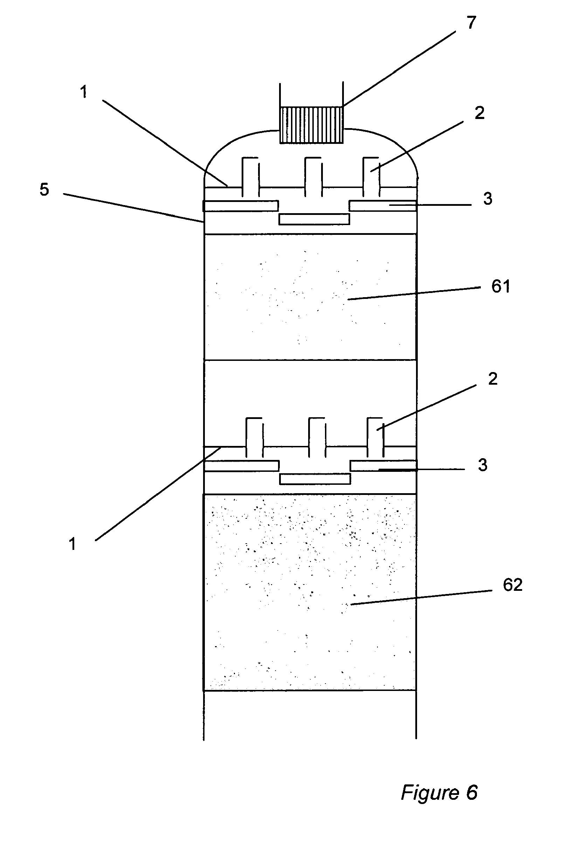

La figure 6 illustre un mode d'utilisation simplifié du dispositif de distribution selon l'invention. La description donnée ci-après à titre d'exemple d'application concerne un système de distribution utilisé dans un réacteur fonctionnant en mode descendant adapté pour les hydrotraitements ou hydrogénation. Le réacteur comporte une enceinte (5) comportant dans sa partie supérieure ou tête de réacteur, un prédistributeur (7). Le mélange distribué par le pré-distributeur (7) s'écoule de manière descendante jusqu'au plateau distributeur (1) qui est situé au-dessus d'un premier lit de solides granulaires (61) ou lit catalytique. Le plateau comporte une pluralité de canaux mélangeurs (2) débouchant sur le plateau dispersif type brise-jet (3). Le mélange biphasique après son passage au travers du lit de solides granulaires (61) est redistribué directement sur un second lit de solides granulaires (62) après être passé à travers un deuxième dispositif selon la présente invention.

La présente invention ne doit pas être limitée aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Dispositif pour distribuer un mélange polyphasique constitué d'au moins une phase gazeuse et au moins une phase liquide, ledit mélange étant en écoulement descendant à travers au moins un lit de solides de particules, et ledit dispositif comportant au moins un plateau (1) situé au-dessus d'un lit de solides de particules, une pluralité de canaux mélangeurs (2) desdites phases liquide et gazeuse, un système dispersif de type plateau brise-jet (3) ayant une porosité contrôlée, muni sur une partie au moins de son périmètre de rebords (36), disposé au dessous des canaux mélangeurs (2) et au-dessus du lit de solides de particules, le dit dispositif de distribution étant **caractérisé en ce que** le système dispersif (3) comporte au moins un élément de séparation (32).

2. Dispositif selon la revendication 1 **caractérisé en ce que** l'élément de séparation (32) est formé par une plaque positionnée perpendiculairement au plateau brise-jet (3).

3. Dispositif selon une des revendications 1 à 2 **caractérisé en ce que** l'élément de séparation (32) a une hauteur comprise entre 50 et 100% de celle du rebord (36) du plateau brise-jet (3).

4. Dispositif selon une des revendications 1 à 3 **caractérisé en ce que** l'élément de séparation (32) la forme d'un parallélépipède rectangle plan.

5. Dispositif selon une des revendications 1 à 4 **caractérisé en ce que** l'élément de séparation (32) est plein ou percé ou poreux.

6. Dispositif selon une des revendications 1 à 5 **caractérisé en ce que** l'élément de séparation (32) ferme entre 40 et 100% de la section transverse du plateau brise-jet (3).

7. Dispositif selon une des revendications 1 à 6 **caractérisé en ce que** l'élément de séparation (32) est positionné directement sous un canal mélangeur (2).

8. Dispositif selon une des revendications 1 à 6 **caractérisé en ce que** l'élément de séparation (32) est positionné sous un canal mélangeur (2), décalé par rapport à ce canal mélangeur (2) de façon à se trouver positionné entre deux canaux mélangeurs (2).

9. Dispositif selon une des revendications 1 à 7 **caractérisé en ce que** le système dispersif comporte plusieurs éléments de séparation (32).

10. Dispositif selon une des revendications 8 à 9 **caractérisé en ce que** les éléments de séparation (32) sont disposés de façon à séparer entre 1 et 10 canaux mélangeurs (2).

11. Dispositif selon une des revendications 1 à 10 **caractérisé en ce que** la répartition des éléments de séparation (32) varie en fonction de leur position sur le plateau brise-jet (3).

12. Dispositif selon une des revendications 1 à 11 **caractérisé en ce que** l'élément de séparation est fixé avec un système de fixation comportant des moyens d'obturation (4) d'une partie du plateau brise-jet (3).

13. Dispositif selon la revendication 12 **caractérisé en ce que** les moyens d'obturation sont formés par une plaque (4).

14. Dispositif selon la revendication 12 **caractérisé en ce que** la plaque (4) peut être de forme carré, rectangle, ronde ou ovale.

15. Dispositif selon une des revendications 1 à 14 **caractérisé en ce que** les canaux mélangeurs sont des cheminées.

16. Dispositif selon une des revendications 1 à 14 **caractérisé en ce que** les canaux mélangeurs (2) sont des ascenseurs de vapeur.

17. Dispositif selon une des revendications 1 à 14 **caractérisé en ce que** les canaux mélangeurs (2) sont des canaux avec cloche.

18. Utilisation du dispositif selon une des revendications 1 à 17 dans un réacteur adapté pour les hydrotraitements ou les hydrogénations ou les oxydations.
